# DEMANDE DE BREVET EUROPEEN

(11) **EP 1 985 768 A1**
(43) Date de publication de la demande: **29.10.2008**
(21) Numéro de dépôt: 07107180.7
(22) Date de dépôt: 27.04.2007
(51) Int. Cl.: E03B 3/03

(54) **Dispositif de stockage des eaux pluviales**

(71) Demandeur: SCP Communication, 94700 Maison Alfort (FR)
(72) Inventeur: Wahnich, Stéphane, 75012 Paris (FR)
(74) Mandataire: Texier, Christian

(57) **Abrégé**

L'invention concerne un dispositif de stockage des eaux pluviales comportant un bac (10, 20), le bac (10, 20) comportant au moins un orifice d'entrée pour la collecte des eaux (11, 21, 26), au moins une zone (1, 3) supérieure de siphon et au moins une zone (2, 4, 5) sous-jacente à la zone (1, 3) supérieure, la zone (1, 3) supérieure de siphon étant munie d'au moins un orifice d'évacuation (12, 22, 26) au niveau de sa partie inférieure destiné à assurer la fonction de siphon et la zone (2, 4, 5) sous-jacente à la zone (1, 3) supérieure étant munie également au niveau de sa partie inférieure d'au moins un orifice d'évacuation (13, 23), caractérisé en ce que l'orifice d'évacuation (13, 23) associé à la zone (2, 4) sous-jacente à la zone (1, 3) supérieure est adapté pour autoriser un débit permanent d'évacuation, avec un seuil de débit maximal (D_{M_3}) inférieur au débit maximal (D_{M_1}) de l'orifice de collecte (11, 21, 26).

## Description

L'invention concerne les dispositifs de collecte et de stockage des eaux pluviales.

L'invention concerne en particuliers les dispositifs de stockage des eaux pluviales, permettant, au moins de manière temporaire, de collecter les eaux pluviales et de les redistribuer de manière contrôlée dans l'espace et dans le temps.

De nos jours, de tels dispositifs de stockage des eaux pluviales collectent l'eau provenant des gouttières d'un bâtiment. L'eau collectée est alors évacuée par des chenaux, soit directement après sa collecte, soit après avoir atteint un niveau seuil dans le bac de récupération.

Cependant, en cas de précipitations fortes, il arrive que le volume du bac de récupération du dispositif ne suffise pas à la prise en charge du volume total des eaux collectées, auquel cas le réseau d'évacuation peut être saturé, ce qui risque de provoquer des dégâts divers tels que des débordements ou encore des inondations.

Le document DE 92 06 685 décrit un dispositif comprenant un bac de récupération, connecté au niveau de sa partie supérieure au système de récupération des eaux pluviales du bâtiment (par exemple une gouttière), et au niveau de sa partie inférieure, par un moyen de régulation tel qu'un robinet, au réseau d'évacuation. Le dispositif comprend en outre un orifice d'évacuation en partie supérieure servant de siphon.

Mais les moyens d'évacuation ne sont pas toujours suffisants en cas de précipitations importantes, et des débordements et inondations peuvent survenir.

Le document WO 98/20209 quant à lui présente un dispositif de collecte et de stockage temporaire des eaux pluviales, comportant un bac de récupération, un orifice d'entrée des eaux pluviales, un orifice en partie supérieure et un orifice en partie inférieure prévus pour l'évacuation des eaux, le débit de l'orifice inférieur étant régulé mécaniquement : en cas de faibles précipitations, l'eau est évacuée par l'orifice inférieur, tandis qu'en cas de précipitations importantes, l'orifice inférieur est bouché, et l'eau est évacuée par l'orifice supérieur.

L'invention a donc pour objectif de proposer un nouveau dispositif de collecte et de stockage des eaux pluviales capable de limiter la saturation du réseau collectif d'assainissement, de manière à éviter ou limiter les inondations.

Un autre objectif de l'invention est de proposer un dispositif de collecte et de stockage des eaux pluviales permettant de réduire les besoins d'ouvrages d'évacuation importants et coûteux à la collectivité.

Enfin, un objectif de l'invention est de proposer un dispositif de collecte et de stockage des eaux pluviales permettant de mettre à disposition d'un usager une réserve d'eau utilisable à des fins domestiques.

Pour cela, l'invention propose un dispositif de stockage des eaux pluviales comportant un bac, le bac comportant au moins un orifice d'entrée pour la collecte des eaux, au moins une zone supérieure de siphon et au moins une zone sous-jacente à la zone supérieure, la zone supérieure de siphon étant munie d'au moins un orifice d'évacuation au niveau de sa partie inférieure destiné à assurer la fonction de siphon et la zone sous-jacente à la zone supérieure étant munie également au niveau de sa partie inférieure d'au moins un orifice d'évacuation, caractérisé en ce que l'orifice d'évacuation associé à la zone sous-jacente à la zone supérieure est adapté pour autoriser un débit permanent d'évacuation, avec un seuil de débit maximal inférieur au débit maximal de l'orifice de collecte.

Certains aspects préférés mais non limitatifs du procédé selon l'invention sont les suivants :
- il comporte en outre au moins une zone inférieure de stockage permanent des eaux, munie au niveau de sa partie inférieure d'au moins un orifice d'évacuation à ouverture contrôlée, et que ladite zone sous-jacente à la zone supérieure constitue une zone intermédiaire située entre la zone supérieure de siphon et la zone inférieure de stockage permanent des eaux,
- la zone sous-jacente à la zone supérieure est une zone de stockage temporaire des eaux,
- l'orifice d'évacuation de la zone sous-jacente à la zone supérieure, comporte des moyens de réglage de débit,
- au moins un orifice de la zone inférieure de stockage permanent des eaux est situé au point le plus bas du bac,
- au moins un orifice de la zone inférieure de stockage permanent des eaux est un orifice de vidange,
- la zone inférieure de stockage permanent des eaux possède au moins deux orifices d'évacuation au niveau de sa partie inférieure,
- la zone inférieure de stockage permanent des eaux possède au moins un orifice de vidange situé au point le plus bas du bac, et un orifice pourvu d'un robinet d'arrêt permettant un puisage manuel des eaux stockées,
- l'orifice d'entrée pour la collecte des eaux est confondu avec un orifice d'évacuation de la zone de siphon,
- il est pourvu en outre d'une trappe de visite avec fermeture de sécurité.

D'autres caractéristiques, buts et avantages de la présente invention apparaîtront à la lecture de la description détaillée qui va suivre, au regard des dessins annexés, donnés à titre d'exemples non limitatifs et sur lesquels :
- La figure 1 présente une vue en coupe d'un premier mode de réalisation d'un dispositif de stockage selon l'invention,
- La figure 2 présente une vue en coupe d'un deuxième mode de réalisation d'un dispositif de stockage selon l'invention,
- La figure 3 présente une vue en coupe d'une variante du deuxième mode de réalisation d'un dispositif de stockage selon l'invention.

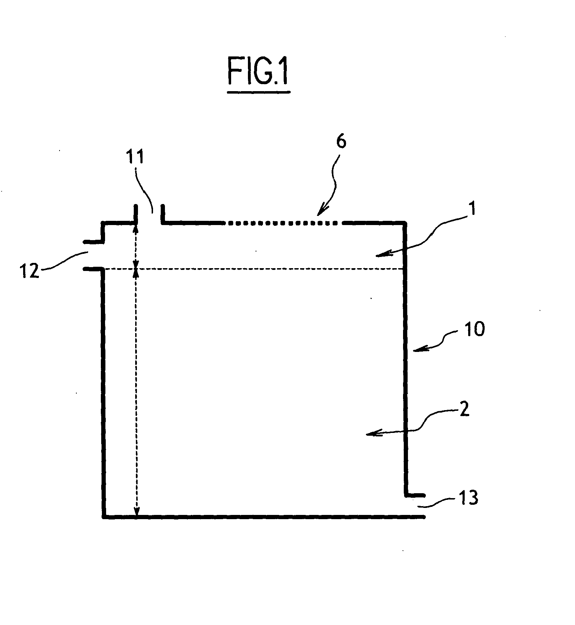

Selon une première forme de réalisation, illustrée sur la figure 1, le dispositif selon l'invention comporte un bac 10 de récupération comprenant au moins :
- un orifice 11 d'entrée en partie supérieure, raccordé au système de récupération des eaux pluviales du bâtiment, par exemple aux gouttières ou toute autre descente d'évacuation,
- un orifice 13 d'évacuation en partie inférieure,
- un orifice 12 d'évacuation, placé de préférence dans la partie supérieure du bac 10, raccordé au système d'évacuation des eaux pluviales de l'édifice.

L'orifice 12 est formé dans une paroi latérale du bac 10, de manière à pouvoir jouer un rôle de siphon, et autorise un débit D₂ permanent d'évacuation. Ainsi, lorsque le niveau d'eau dans le bac 10 atteint une hauteur seuil située au niveau inférieur de l'orifice 12, le trop-plein est immédiatement évacué vers le système d'évacuation des eaux.

La taille des orifices 11 et 12 est choisie de sorte que le débit maximal d'entrée D_{M_1} de l'orifice 11 soit égal au débit maximal D_{M_2} de sortie de l'orifice 12. Cette contrainte sur la taille des orifices 11 et 12 permet ainsi d'interdire tout débordement du bac, quelle que soit la force des précipitations.

L'orifice 13 joue un rôle d'évacuation des eaux vers le milieu naturel extérieur. On prévoit en outre de le munir d'un moyen de régulation de débit D₃, de manière à pouvoir faire varier le débit de sortie de l'orifice 13 entre une valeur minimale D_{m _3} et une valeur maximale D_{M_3}, de préférence entre un débit strictement non nul et un débit strictement inférieur au débit maximal D_{M_1} d'entrée des eaux pluviales par l'orifice 11. Un tel moyen de réglage est par exemple réglable au moyen d'une clé amovible, pour prévenir les réglages intempestifs par l'usager. De préférence, le moyen de régulation est intégré au bac 10 par construction, sa présence étant indispensable.

Ainsi, un usager peut laisser le bac 10 se vider vers le milieu naturel en autorisant un débit permanent vers ce milieu d'une valeur plus ou moins importante selon les applications désirées et/ou les capacités d'absorption du milieu naturel.

Les fonctions respectives des orifices d'entrée 11 et d'évacuation 12 et 13 permettent de diviser le bac 10 en deux zones distinctes 1 et 2 superposées, chacune ayant un rôle particulier.

La première zone 1 s'étend de la partie supérieure du bac 10 jusqu'à la partie inférieure de l'orifice 12. Elle définit une zone de siphon.

La deuxième zone 2, sous-jacente à la zone supérieure de siphon 1, définit une zone de stockage temporaire des eaux. L'eau y est en effet collectée temporairement en attendant d'être évacuée par l'orifice 13. Comme le débit de sortie par l'orifice 13 est inférieur au débit d'entrée par l'orifice 11, l'eau s'accumule dans le bac avant d'être évacuée par l'orifice 13. La durée de stockage dépend donc du débit sortant réglé par l'usager par rapport au débit entrant des eaux provenant du système de récupération.

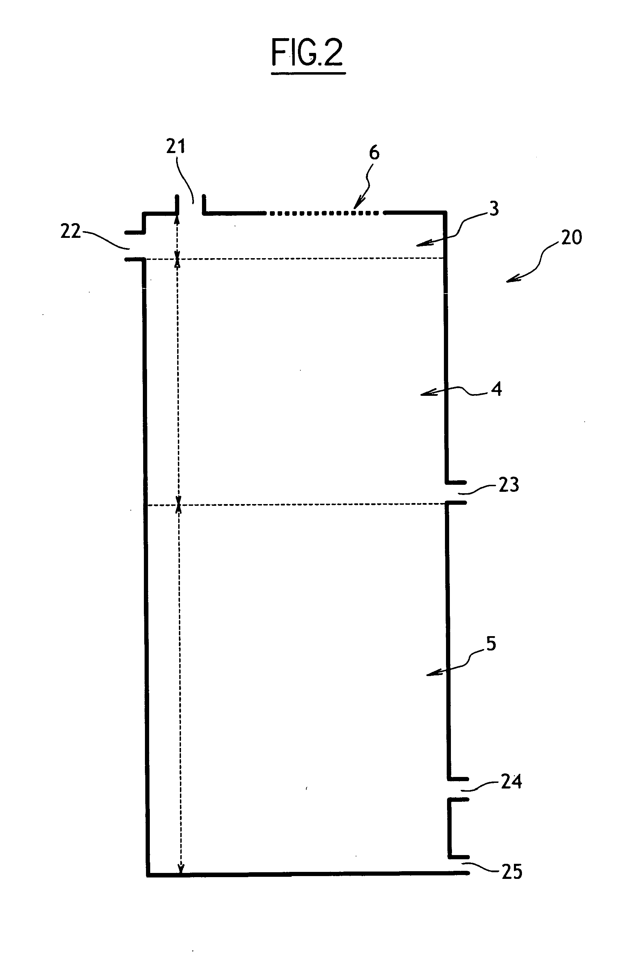

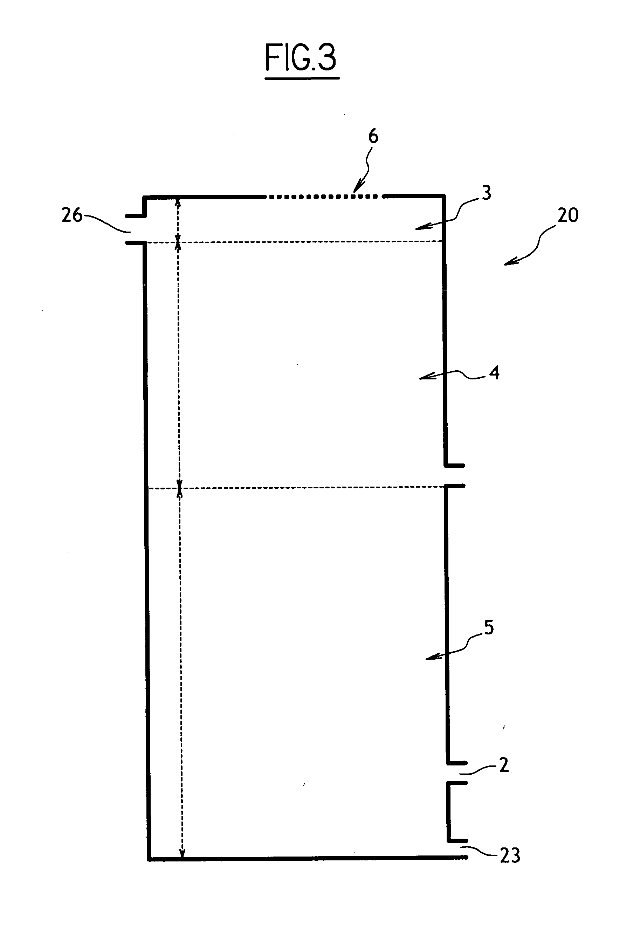

Selon une deuxième forme de réalisation, illustrée sur les figures 2 et 3, le dispositif selon l'invention comprend un bac 20 de récupération comprenant au moins :
- un orifice 21 d'entrée en partie supérieure, raccordé au système de récupération des eaux pluviales du bâtiment, par exemple aux gouttières ou toute autre descente d'évacuation,
- un orifice 22 d'évacuation, placé de préférence en partie supérieure du bac 20, raccordé au système d'évacuation des eaux,
- un orifice 24 d'évacuation en partie inférieure du bac 20,
- un orifice 23 formé dans une paroi latérale du bac 20, à une hauteur située entre les orifices 22 et 24 d'évacuation.

Dans cette forme de réalisation, les orifices 21 et 22 ont une fonction identique à celle des orifices 11 et 12 respectivement, et leurs débits maximum sont également les mêmes : D_{M_1} = D_{M_2}.

Les orifices 23 et 24 sont des orifices d'évacuation des eaux vers le milieu naturel. Néanmoins, leur positionnement dans le bac leur confère une fonction différente.

L'orifice 23 joue un rôle d'orifice d'évacuation temporaire, de la même manière que l'orifice d'évacuation 13 de la première forme de réalisation. Ainsi, on prévoit également de le munir d'un même moyen de réglage du débit D₃, de manière à pouvoir faire varier le débit de sortie de l'orifice 13 entre une valeur minimale D_{m_3} et une valeur maximale D_{M_3}, de préférence entre un débit strictement non nul et un débit strictement inférieur au débit maximal D_{M_1} d'entrée des eaux pluviales par l'orifice 21. L'usager peut donc laisser le bac se vider vers le milieu naturel selon un débit permanent défini, adapté par exemple au milieu ambiant.

L'orifice 24 d'évacuation quant à lui est un moyen de puisage manuel des eaux stockées, permettant à un usager d'utiliser l'eau stockée dans le bac dans le cadre privé (arrosage, nettoyage, etc.) grâce à un moyen de régulation de débit, par exemple un robinet d'arrêt. On munit alors l'orifice 24 d'un filetage standard, qui peut être réalisé par moulage, rapporté (grâce à un système de filetage avec joint d'étanchéité et écrou), etc. L'usager peut alors utiliser l'eau stockée dans le bac dans le cadre privé (arrosage des espaces verts, nettoyage d'un véhicule, nettoyage des voiries, etc.), en réglant le débit à la valeur souhaitée.

Ainsi, les orifices 21, 22, 23 et 24 définissent-il, de par leur positionnement et leur fonction respectifs, trois zones 3, 4 et 5 dans le bac 20, chacune ayant un rôle particuliers.

La première zone 3, s'étend de la partie supérieure de bac 20 jusqu'à la partie inférieure de l'orifice 22. Elle définit une zone de siphon.

La deuxième zone 4 est sous-jacente à la zone de siphon 3 et définit une zone de stockage temporaire des eaux. Elle s'étend de la partie inférieure de l'orifice 22 à la partie inférieure de l'orifice 23.

La troisième zone 5 est sous-jacente à la zone de stockage temporaire, et définit une zone de stockage permanente des eaux. En effet, en fermant le robinet placé au niveau de l'orifice 24 d'évacuation, l'usager laisse l'eau collectée s'accumuler dans le bac 20 jusqu'à ce qu'elle atteigne la hauteur de l'orifice intermédiaire 23 d'évacuation. Dans cette partie 5 inférieure du bac 20, l'eau est donc stockée de façon permanente.

Puis, lorsque le niveau de l'eau dans le bac 20 atteint la partie inférieure de la zone 4 de stockage temporaire, elle est évacuée par l'orifice 23 à un débit strictement non nul. Cependant, si le débit entrant au niveau de l'orifice 21 est supérieur au débit sortant au niveau de l'orifice 23, l'eau s'accumule temporairement dans la zone 4, et le niveau d'eau continue de monter dans le bac 20.

Alors, lorsque le niveau atteint la partie inférieure de la zone 3 de siphon, l'eau est en outre évacuée par l'orifice 22 vers le système d'évacuation des eaux. Etant donné que le débit maximum D_{M_1} entrant au niveau de l'orifice 21 est égal au débit maximum D_{M_2} sortant au niveau de l'orifice 22, le bac de récupération ne déborde pas, et le niveau de l'eau accumulé se stabilise.

A la fin de l'épisode pluvieux, le niveau d'eau décroît. D'abord, l'eau est évacuée par les orifices 22 et 23. Puis, le niveau d'eau atteint la zone 4 temporaire de stockage : l'eau est alors évacuée par l'orifice 23 uniquement. Enfin, le niveau atteint la zone 5 de stockage permanent, où il cesse de baisser, jusqu'à ce qu'un usager ouvre le robinet de l'orifice 24.

Comme nous l'avons vu plus haut, c'est le débit maximum D_{M_1} entrant qui dimensionne la taille des divers orifices. Pour cela, on tient compte non seulement de la surface de collecte des eaux pluviales, telles que la surface du(des) toit(s), d'éventuelles terrasses, etc., mais également de la capacité d'absorption en aval du dispositif (surface du milieu naturel, coefficient de perméabilité, etc.).

Par ailleurs, le volume de chaque zone divisant le bac 10, 20 varie en fonction de l'emplacement des divers orifices, et peut être choisi en fonction des applications souhaitées par l'usager.

Un usager qui souhaite privilégier le stockage permanent des eaux afin de pouvoir disposer d'une réserve d'eau plus grande pour son usage domestique aura besoin d'un bac 20 ayant une zone 5 de stockage temporaire importante, l'orifice 23 étant alors formé relativement haut dans la paroi latérale, tandis qu'un usager ayant peu (voire pas) besoin d'une réserve d'eau aura besoin d'un bac présentant une zone 5 de stockage permanent de faible volume (voire pas de zone 5 de stockage permanent, comme dans la première forme de réalisation).

On réduit ainsi, grâce aux divers orifices et zones du bac, les besoins d'ouvrages d'évacuation.

Selon une variante, valable pour les deux formes de réalisation, l'orifice supérieur d'évacuation et l'orifice d'entrée sont confondus : le bac ne comprend alors qu'un unique orifice 26, placé en partie supérieure (comme illustré sur la figure 3). Le cas échéant, ledit orifice 26 est formé dans une paroi latérale du bac 20, et est connecté d'une part au système d'évacuation des eaux, et d'autre part au système de récupération des eaux. Pour cela, le bac peut par exemple être muni au niveau de l'orifice 26 d'un moyen de liaison de chaque système sous la forme d'un raccord en T.

En outre, on prévoit de munir le bac 10, 20 d'un orifice 25 de vidange, de conception et de réalisation identique à celles de l'orifice 24 de puisage.

Ledit orifice 25 est alors formé au point le plus bas du bac, pour autoriser une vidange totale du bac. Une telle vidange est par exemple nécessaire en cas de gel en période de froid, ou en prévention, en cas de précipitations importantes à venir (signalées par exemple par le service de protection civile, Météo France, etc.) Elle augmente ainsi la capacité tampon du dispositif en utilisant le retour en milieu naturel ou le réseau d'évacuation collectif avant que les précipitations ne le sollicitent.

Enfin, on prévoit une trappe 6 de visite avec fermeture de sécurité dans la paroi supérieure du bac, afin de permettre à un usager d'ouvrir le bac et d'y effectuer des travaux d'entretien et de maintenance.

## Revendications

1. Dispositif de stockage des eaux pluviales comportant un bac (10, 20), le bac (10, 20) comportant au moins un orifice d'entrée pour la collecte des eaux (11, 21, 26), au moins une zone (1, 3) supérieure de siphon et au moins une zone (2, 4, 5) sous-jacente à la zone (1, 3) supérieure, la zone (1, 3) supérieure de siphon étant munie d'au moins un orifice d'évacuation (12, 22, 26) au niveau de sa partie inférieure destiné à assurer la fonction de siphon et la zone (2, 4, 5) sous-jacente à la zone (1, 3) supérieure étant munie également au niveau de sa partie inférieure d'au moins un orifice d'évacuation (13, 23),
**caractérisé en ce que** l'orifice d'évacuation (13, 23) associé à la zone (2, 4) sous-jacente à la zone (1, 3) supérieure est adapté pour autoriser un débit permanent d'évacuation, avec un seuil de débit maximal (D_{M_3}) inférieur au débit maximal (D_{M_1}) de l'orifice de collecte (11, 21, 26).

2. Dispositif selon la revendication 1, **caractérisé en ce qu'**il comporte en outre au moins une zone (5) inférieure de stockage permanent des eaux, munie au niveau de sa partie inférieure d'au moins un orifice (24, 25) d'évacuation à ouverture contrôlée, et que ladite zone (2,4) sous-jacente à la zone (1, 3) supérieure constitue une zone intermédiaire située entre la zone (1, 3) supérieure de siphon et la zone (5) inférieure de stockage permanent des eaux.

3. Dispositif de stockage selon l'une des revendications précédentes,
**caractérisé en ce que** la zone (2, 4) sous-jacente à la zone supérieure est une zone de stockage temporaire des eaux.

4. Dispositif de stockage selon l'une quelconque des revendications précédentes, **caractérisé en ce que** l'orifice (13, 23) d'évacuation de la zone (2, 4) sous-jacente à la zone (1, 3) supérieure, comporte des moyens de réglage de débit.

5. Dispositif de stockage selon l'une quelconque des revendications précédentes prise en combinaison avec la revendication 2, **caractérisé en ce qu'**au moins un orifice (24, 25) de la zone inférieure de stockage permanent des eaux est situé au point le plus bas du bac.

6. Dispositif de stockage selon l'une quelconque des revendications précédentes prise en combinaison avec la revendication 2, **caractérisé en ce qu'**au moins un orifice (25) de la zone inférieure de stockage permanent des eaux est un orifice de vidange.

7. Dispositif de stockage selon l'une quelconque des revendications précédentes prise en combinaison avec la revendication 2, **caractérisé en ce que** la zone (5) inférieure de stockage permanent des eaux possède au moins deux orifices (24, 25) d'évacuation au niveau de sa partie inférieure.

8. Dispositif de stockage selon la revendication précédente, **caractérisé en ce que** la zone (5) inférieure de stockage permanent des eaux possède au moins un orifice de vidange (25) situé au point le plus bas du bac, et un orifice (24) pourvu d'un robinet d'arrêt permettant un puisage manuel des eaux stockées.

9. Dispositif de stockage selon l'une quelconque des revendications précédentes, **caractérisé en ce que** l'orifice (11, 21, 26) d'entrée pour la collecte des eaux est confondu avec un orifice (12, 22, 26) d'évacuation de la zone (1, 3) de siphon.

10. Dispositif de stockage selon l'une quelconque des revendications précédentes, **caractérisé en ce qu'**il est pourvu en outre d'une trappe (6) de visite avec fermeture de sécurité.
